Europäisches Patentamt

European Patent Office

Office européen des brevets

(19)

(11) Veröffentlichungsnummer : **0 224 928**
**B1**

# (12) EUROPÄISCHE PATENTSCHRIFT

(45) Veröffentlichungstag der Patentschrift :
28.09.88

(21) Anmeldenummer : 86116885.4

(22) Anmeldetag : 04.12.86

(51) Int. Cl.⁴ : **B 65 G 17/20**, B 65 G 17/34,
B 62 D 65/00

(54) Förderanlage zum Transport von Karosserien.

(30) Priorität : 06.12.85 DE 3543193

(43) Veröffentlichungstag der Anmeldung :
10.06.87 Patentblatt 87/24

(45) Bekanntmachung des Hinweises auf die Patenterteilung : 28.09.88 Patentblatt 88/39

(84) Benannte Vertragsstaaten :
ES FR GB IT SE

(56) Entgegenhaltungen :
DE-B- 1 556 118
FR-A- 2 525 571
US-A- 4 381 055

(73) Patentinhaber : BAYERISCHE MOTOREN WERKE
Aktiengesellschaft
Postfach 40 02 40 Petuelring 130 - AJ-30
D-8000 München 40 (DE)

(72) Erfinder : Gericke, Ekkehard, Dr.
Aicherweg 9a
D-8300 Landshut/Altdorf (DE)
Erfinder : Gaul, Karl-Heinz
Hohenbrunnerstrasse 18
D-8000 München 82 (DE)
Erfinder : Schwannberger, Erich
Blütenstrasse 9
D-8047 Karlsfeld (DE)

(74) Vertreter : Bücken, Helmut
Bayerische Motoren Werke Aktiengesellschaft Postfach 40 02 40 Petuelring 130 - AJ-30
D-8000 München 40 (DE)

EP 0 224 928 B1

## Beschreibung

Die Erfindung bezieht sich auf eine Vorrichtung der im Oberbegriff des ersten Anspruchs angegebenen Art.

Es ist allgemein bekannt, bei der Kraftfahrzeugherstellung die Karosserie in einem Gehänge durch die einzelnen Montagestationen zu fördern. Hierbei ist jedes Gehänge speziell auf die Größe und aufnahmespezifischen Punkte einer Karosserie abgestellt. Derartige Anlagen eignen sich nur zur Massenherstellung eines Karosserietyps. Sobald verschiedene Karosserietypen auf einer Anlage bearbeitet werden sollen, sind unterschiedliche Gehänge erforderlich. Dies bedeutet einen großen logistischen und steuerungstechnischen Aufwand. Daneben muß bei jedem Wechsel der Förderanlage die Karosserie aus dieser gelöst werden und bei Belegen aller Befestigungspunkte der alten Förderanlage an der Karosserie diese zwischengelagert werden, bevor sie von der neuen Förderanlage aufgenommen werden kann.

Aus der US-PS-4 381 055 ist eine Hängebahnförderanlage bekannt. Hierbei sind Teile des Gehänges, und zwar die Teile, die die karosserieseitigen Aufnahmeeinrichtungen beinhalten, auswechselbar angeordnet. Das Herausnehmen dieser Elemente ist jedoch nur dann möglich, wenn keine Karosserie im Gehänge vorgesehen wird. Aufgrund der speziellen Ausbildung der Befestigung ist diese darüber hinaus nur manuell möglich. Bei einem Umsetzvorgang der Karosserie von einer Förderanlage zur anderen muß diese vollständig aus dem Gehänge gelöst werden.

Aufgabe der vorliegenden Erfindung ist es, die gattungsgemäße Förderanlage weiter zu vereinfachen.

Diese Aufgabe wird erfindungsgemäß durch die kennzeichnenden Merkmale des ersten Anspruchs gelöst. Die Erfindung basiert auf dem Gedanken, daß zwischen Karosserie und Halteeinrichtung eine Montagetraverse zwischengeschaltet wird. Diese Montagetraverse hat einerseits karosseriespezifische Aufnahmepunkte und andererseits karosserieunabhängige Aufnahmepunkte bzw. Befestigungseinrichtungen für die Halteeinrichtung. Dadurch können in einer Halteeinrichtung eine Vielzahl von unterschiedlichen Karosserietypen befestigt werden, ohne jegliche Änderung an der Halteeinrichtung. Ein weiterer Vorteil der Erfindung liegt darin, daß die Karosserien baumusterunabhängig so genau positioniert werden können, daß ein Automatisieren von Montagevorgängen und Umsetz- und Fördervorgängen ohne großen Zusatzaufwand möglich wird.

Unter Förderanlage im Sinne der Erfindung können sämtliche bekannte Förderanlagen wie Hängebahnförderanlage, fahrerlose Transportsysteme aber auch Bodenförderer und fahrbare Transportgestelle, die von Hand oder mit Hilfe von Zugmaschinen bewegt werden, verstanden werden. Halteeinrichtungen im Sinne der Erfindung sind demgemäß — je nach verwendeter Förderanlage — Gehänge, Skids etc.

Die Weiterbildung nach Anspruch 2 hat den Vorteil, daß bei einer Übergabe von einer Förderanlage zu einem anderen die Karosserie nicht zwischengelagert oder abgesetzt werden muß, sondern daß die aufnehmende Förderanlage in die freien Befestigungseinrichtungen der Montagetraverse eingreifen kann.

Die Weiterbildungen nach Anspruch 3 und 4 beschreiben bevorzugte Befestigungseinrichtungen. Hierbei kann die Anordnung nach Anspruch 3 sowohl radial wie auch axial von der Montagetraverse abragen und in entsprechende Aufnahmeöffnungen der Halteeinrichtung eingreifen. Bei der Ausbildung nach Anspruch 4 sind die abragen und in entsprechende Aufnahmeöffnungen der Halteeinrichtung eingreifen. Bei der Ausbildung nach Anspruch 4 sind die Befestigungseinrichtungen an der Halteeinrichtung angeordnet. Beiden Befestigungseinrichtungen gemeinsam ist die lagegenaue verdrehsichere Befestigung zwischen Montagetraverse und Halteeinrichtung, so daß auch verschwenkbare Halteeinrichtungen verwendet werden können.

Die Weiterbildung nach Anspruch 5 hat den Vorteil, daß über die Flanschflächen Klemmelemente der Halteeinrichtung angreifen können, so daß hierdurch eine Sicherung in vertikaler Richtung der Karosserie durchgeführt werden kann.

Zum Fördern kompletter Karosserien sind immer zwei Montagetraversen — auf jeder Längsseite der Karosserie eine — notwendig. Zur Zentrierung der Karosserien dienen die Merkmale des Anspruchs 6. Anspruch 7 beschreibt eine bevorzugte konstruktive Ausführung für die Zentrierung. Sind die Befestigungseinrichtungen zweifach an jedem Aufnahmepunkt vorgesehen, so gilt dies auch für die eine Bohrung mit Nennmaß als auch für die anderen.

Je nach Ausbildung der Halteeinrichtung ist die Weiterbildung nach Anspruch 8 vorteilhaft. Dadurch ist es möglich, daß die Halteeinrichtung selbst nicht an der Traverse in der Schwerpunktslinie der Karosse angreift, sondern dorthin gelegt werden kann, wo die Halteeinrichtung bei Montagearbeiten nicht behindert. Das dann entstehende Drehmoment wird durch die weitere, zusätzliche Befestigungseinrichtung aufgefangen.

Die Ansprüche 9 und 10 beschreiben hierzu geeignete Ausführungsformen.

Die Ansprüche 11 und 12 beschreiben besonders vorteilhaft ausgebildete Aufnahmeeinrichtungen. Hierbei hat die Weiterbildung nach Anspruch 10 den Vorteil, daß die Schraube als Befestigungsmittel zwischen Montagetraverse und Karosserie immer an der Montagetraverse verbleibt, so daß bei ihrer De- und Montage kein zusätzliches Losteil entsteht. Die Weiterbildung nach Anspruch 2 beschreibt eine einfache Anordnung der Dome. Dadurch wird der zusätzliche Vorteil erreicht, daß die Montagetraverse aus einem einfachen gängigen Profilkörper hergestellt werden kann und trotzdem einen seitlichen Abstand von der Karosserie aufweist, damit die Halteeinrichtung, wenn sie als Gehänge ausgebildet ist, mit genügendem Abstand zur Karosserie an der Montagetraverse angreifen kann.

Im folgenden wird die Erfindung anhand eines bevorzugten Ausführungsbeispiels näher erläutert.

Es stellen dar :

Fig. 1 eine schematisierte Seitenansicht eines C-Gehänges in erfindungsgemäßer Ausgestaltung ;

Fig. 2a, b eine Seitenansicht und Draufsicht auf eine erfindungsgemäß augestaltete Montagetraverse ;

Fig. 3 eine Prinzipskizze eines Verriegelungsmechanismuses zwischen Traverse und Gehängearm ;

Fig. 4a Seitenansicht eines Ende einer erfindungsgemäß ausgestalteten Montagetraverse mit mit Befestigungseinrichtungen und Aufnahmeeinrichtung ;

Fig. 4b eine Draufsicht auf die Anordnung nach Fig. 4a ;

Fig. 5 eine schematisierte Seitenansicht eines Schwenkgehänges ;

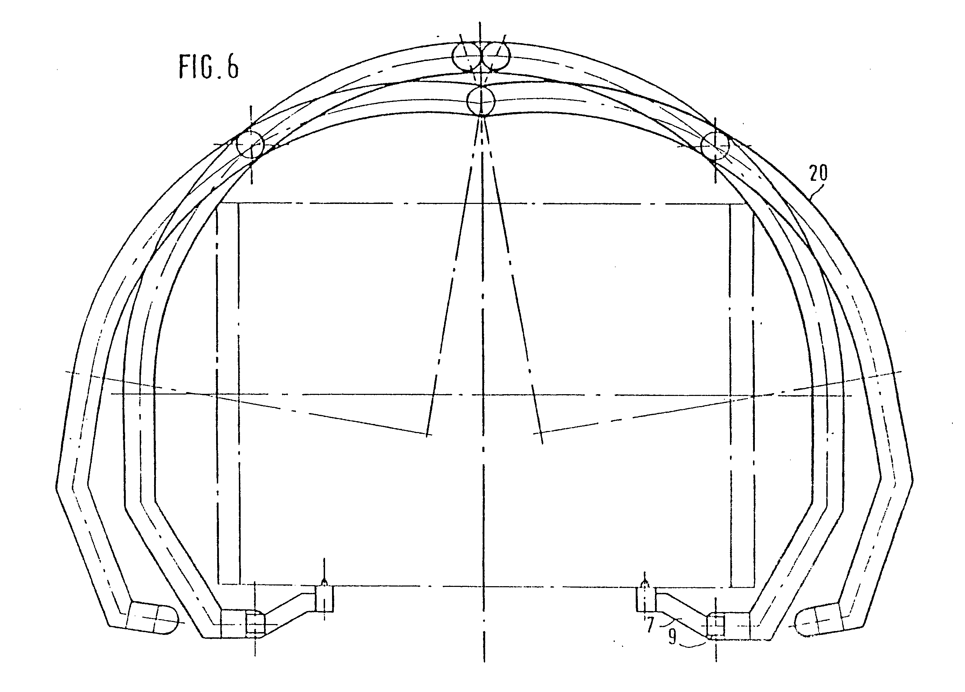

Fig. 6 die Vorderansicht des in Fig. 4 dargestellten Gehänges.

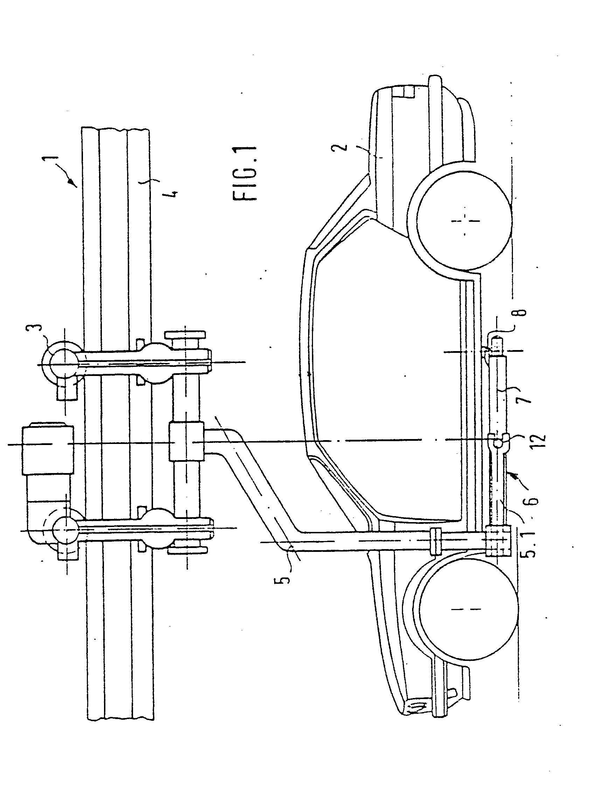

In Fig. 1 ist schematisch als Förderanlage eine Hängebahnförderanlage 1 mit einer Karosserie 2 als Fördergut dargestellt. Das Hängebahnförderanlage 1 besteht im wesentlichen aus einem Fahrwerk 3, welches in einer Trageinrichtung 4 gehalten und verfahren wird. An dem Fahrwerk 3 ist als Halteeinrichtung ein Gehänge 5 befestigt. Es weist an seinem unteren freien Ende Befestigungseinrichtungen 6 auf. In diesen Befestigungseinrichtungen 6 ist eine Montagetraverse 7 befestigt. Die Montagetraverse 7 trägt über entsprechende Aufnahmeeinrichtungen 8 die Karosserie 2.

Die Montagetraverse 7 ist derart ausgebildet, daß ihre Befestigungseinrichtungen 6 unabhängig von der zu tragenden Karosserie 2 ausgelegt sind. Hingegen sind die Aufnahmeeinrichtungen 8 an der Montagetraverse 7 zur Aufnahme der Karosserie 2 karosserietypabhängig und können dementsprechend von Karosserietyp zu Karosserietyp variieren. Dadurch wird der Vorteil erzielt, daß nur noch eine Montagetraverse 7 für jeden Karosserietyp bereitgehalten werden muß, während das Fahrwerk 3 und das Gehänge 5 typunabhängig sind.

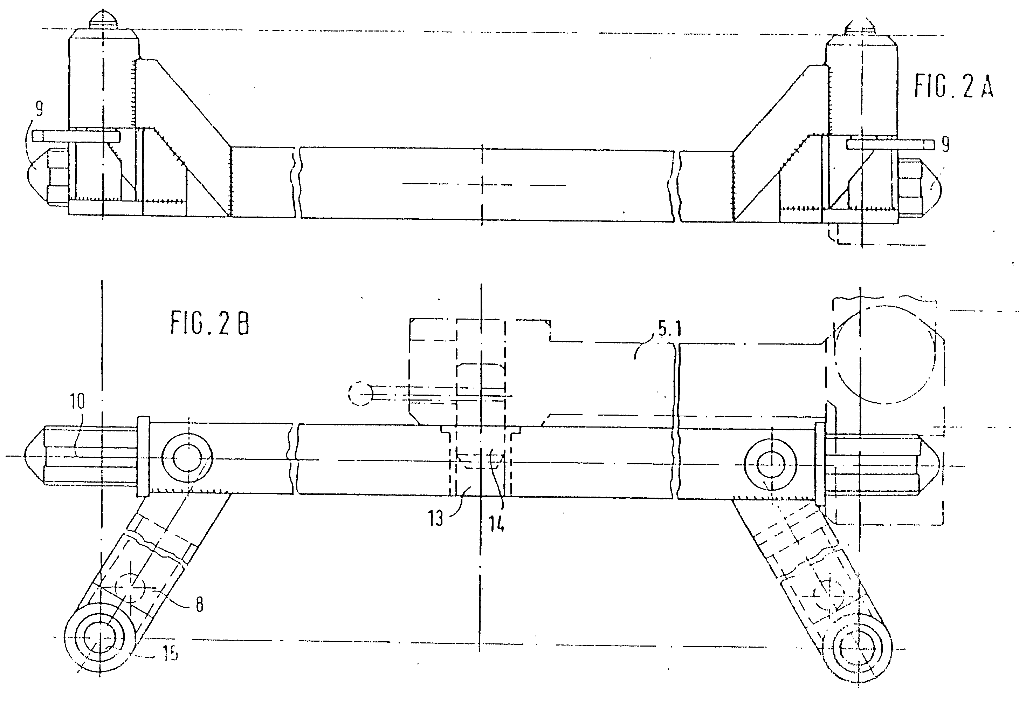

In Fig. 2 ist in der Abb. a eine Seitenansicht und in der Abb. b eine Draufsicht auf die in Fig. 1 gezeigte Montagetraverse 7 dargestellt. Sie weist an ihren beiden Längsenden je einen Dorn 9 auf. An diesem Dorn 9 wird das Gehänge 5 befestigt. Hierzu ist der Dorn auf seinem Umfang mit einer Profilierung 10 versehen. Dadurch wird erreicht, daß eine verdrehsichere Verbindung zwischen Gehänge 5 und Montagetraverse 7 erreicht wird.

Zur Drehmomentabstützung — je nach Gehängetyp — kann die Montagetraverse 7 eine zusätzliche Befestigungseinrichtung 11 aufweisen. Diese besteht in Fig. 1 aus einem radial von der Montagetraverse 7 abstehenden Bolzen 12 und in dem Ausführungsbeispiel nach Fig. 2b in einer Bohrung 13. In beiden Ausführungsbeispielen wirkt diese zusätzliche Befestigungseinrichtung 11 mit dem Gehänge 5 zsammen. In dem Ausführungsbeispiel nach Fig. 1 geschieht dies dadurch, daß an dem Gehänge 5 ein Arm 5.1 vorgesehen ist, der an seinem vorderen Ende gabelförmig erweitert ist, um den Bolzen 12 zu umfassen.

In dem Ausführungsbeispiel nach Fig. 2b ist an dem Arm 5.1 des Gehänges 5 ein beweglich gelagerter Verriegelungsbolzen 14 vorgesehen, der in die Bohrung 13 eingreifen kann.

Die Montagetraverse 7 weist weiterhin karosserietypabhängige Aufnahmeeinrichtungen 8 auf, die in dem Ausführungsbeispiel nach Fig. 2 als nach innen unter den Karosserieunterboden gerichtete Arme mit Zentrierdorne 15 ausgebildet sind. Die Zentrierdorne 15 dienen gleichzeitig zum Befestigen der Montagetraverse 7 an der Karosserie 2. Sie sind deshalb in an sich bekannter Weise mit entsprechenden Befestigungsmitteln ausgerüstet.

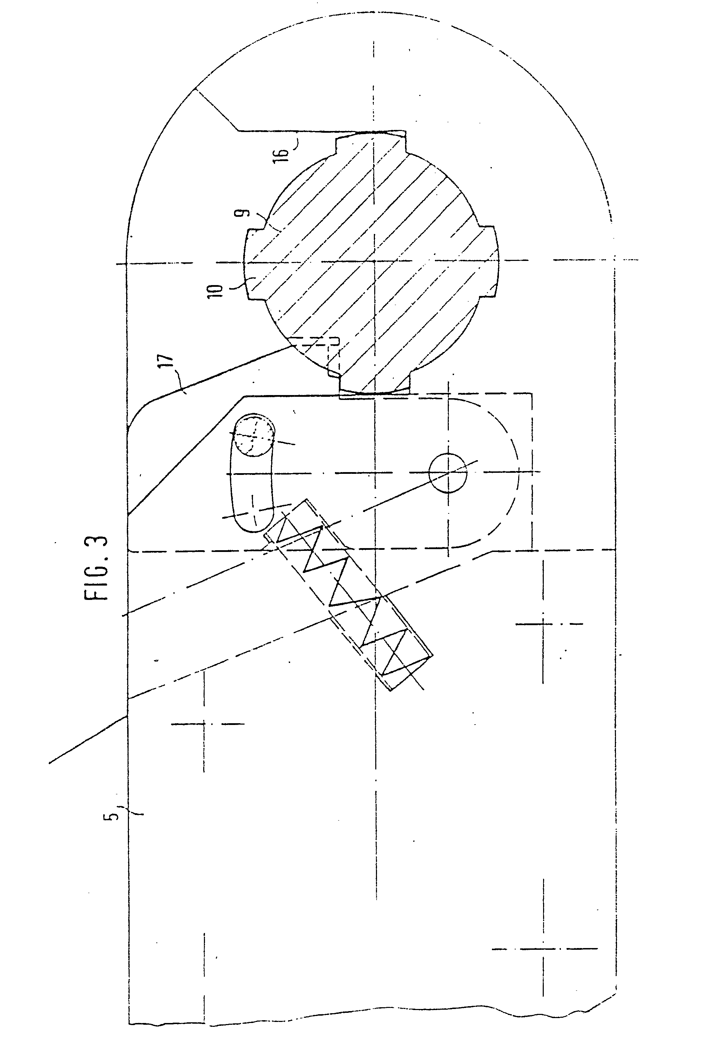

In Fig. 3 ist ein Querschnitt durch einen Dorn 9 der Montagetraverse 7 mit entsprechender Ausbildung der Befestigungseinrichtung 6 gezeigt. Hierzu weist das Gehänge 5 einen in Seitenansicht U-förmigen Querschnitt auf. Die innere Umfangsfläche 16 des Gehänges 5 ist entsprechend der Profilierung 10 des Dornes 9 ausgebildet. Eine bewegliche Klaue 17 an dem Gehänge 5 dient dazu, es von unten um den Dorn 9 eingreifen zu lassen und dann nach Einrasten in der in Fig. 3 dargestellten Position zu verhindern, daß der Dorn 9 und damit die Montagetraverse 7 aus dem Gehänge 5 herausgehoben werden kann. Gleichzeitig wird dadurch auch eine Verdrehsicherung zwischen Montagetraverse 7 und Gehänge 5 erzielt.

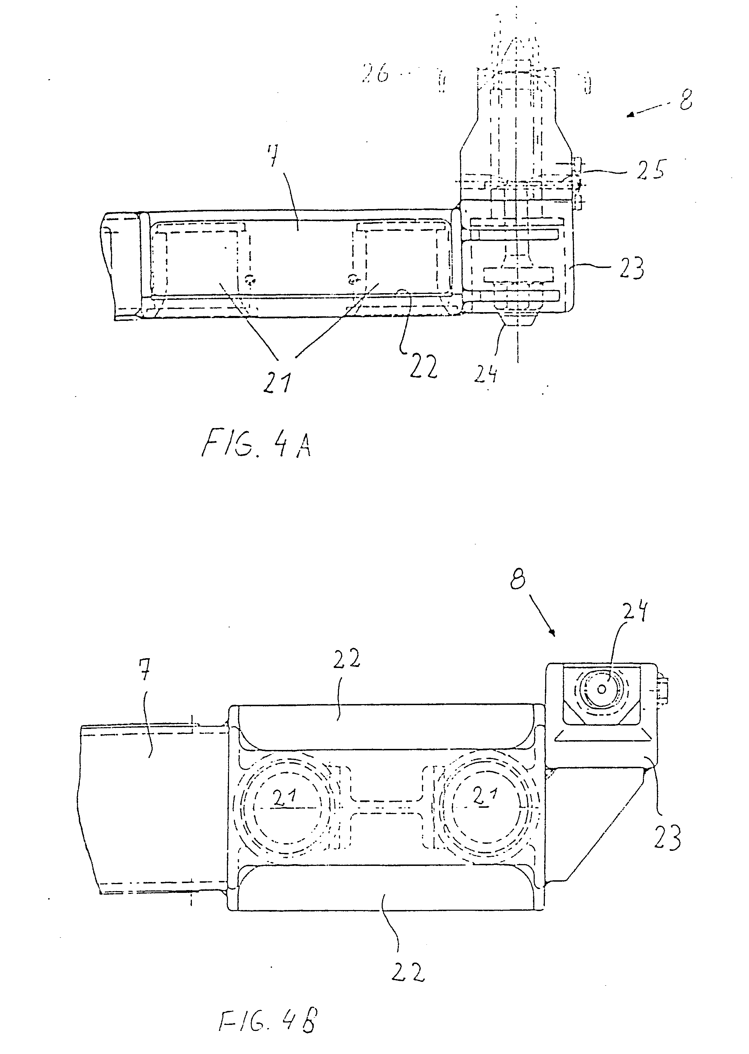

Fig. 4a zeigt eine andere Möglichkeit der Ausgestaltung der Befestigungseinrichtungen und der Aufnahmeeinrichtung der Montagetraverse 7. Hier bestehen die Befestigungseinrichtungen 6 aus zwei Sacklochbohrungen 21, deren Öffnungen nach unten, d. h. der Karosserie abgewandt, vorgesehen sind. In diese Bohrungen greift die Befestigungseinrichtungen — z. B. Zapfen — des Gehänges ein. Aufgrund der doppelt vorgesehenen Bohrungen an jeder Befestigungsstelle ist immer eine Bohrung frei, in der bei einem Umsetzvorgang von einer Förderanlage zur anderen die neue Förderanlage eingreifen kann, bevor die alte von der Montagetraverse gelöst wird.

Zum Verriegeln in vertikaler Richtung sind neben den beiden Bohrungen 21 je eine Flanschfläche 22 vorgesehen. Hier kann ein mit einer Klemmnase versehener Verriegelungszapfen angreifen.

Die Aufnahmeeinrichtung 8 besteht in dieser Ausführungsvariante aus einem an der Montagetraverse 7 angeschweißten Dom 23. In diesem Dom 23 ist eine Schraube 24 unverlierbar geführt. Hierzu ist ein gabelförmiger Haltestift 25 vorgesehen, der einen entsprechend ausgebildeten Absatz an der Schraube 24 hintergreift. Dadurch wird die Schraube 24 daran gehindert, in axialer Richtung nach unten aus dem Dom 23 herauszufallen. Selbstverständlich sind die Schraube 24 und der Haltestift 25 derart ausgebildet, daß die Schraube 24 in vertikaler Richtung, d. h. in Richtung auf die Karosserie, sich genügend verschieben läßt, um in eine in der Karosserie vorgesehene Gewindebuchse eingeschraubt werden zu können. Die karosserieseitige Gewindebuchse ist in Fig. 4a strichpunktiert angedeutet und mit 26 bezeichnet.

Fig. 4b stellt eine Draufsicht auf die Anordnung nach Fig. 4a dar. Hierbei ist deutlicfh sichtbar, wie der Dom 23 an der Montagetraverse 7 seitlich angeschweißt ist. Hierdurch kann mit einfachen Mitteln ein seitlicher Abstand zwischen der Befestigungseinrichtung 6 und der Aufnahmeeinrichtung erzielt werden, so daß die Arme eines Gehänges die Aufnahmebohrungen 21 und die Flanschflächen 22 erreichen können, ohne zu weit unter die Karosserie greifen zu müssen und damit bei Montagearbeiten hinderlich zu sein.

In Fig. 4 ist die Hängebahnförderanlage 1 anhand eines an sich bekannten Schwenkgehänges 20 dargestellt. Diese Anordnung unterscheidet sich von den bisher dargestellten dadurch, daß beide axialen Endpunkte der Montagetraverse 7 von dem Schwenkgehänge 20 belegt sind. Dadurch ist es möglich, die zusätzliche Befestigungseinrichtung 11 fallenzulassen.

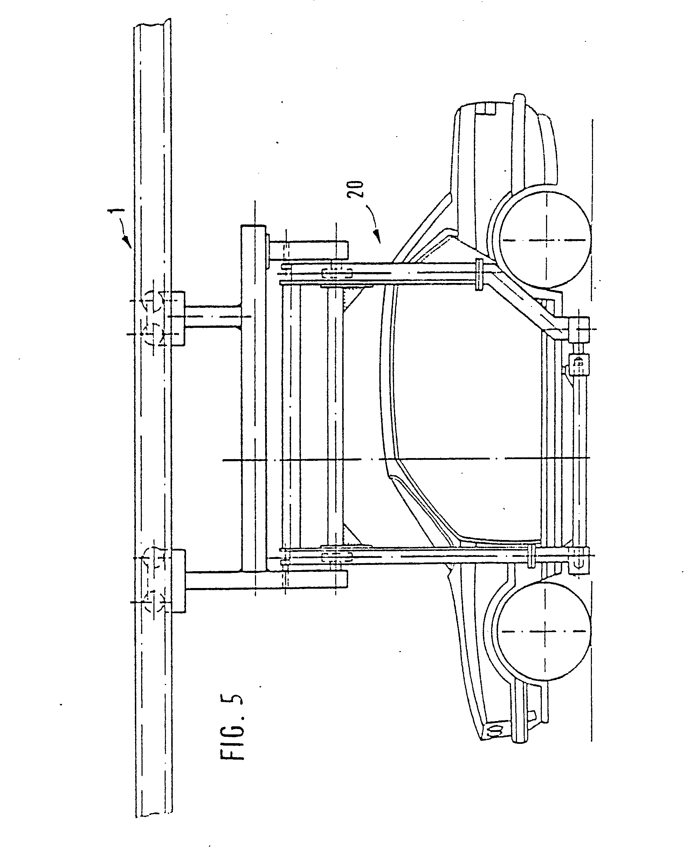

In Fig. 5 ist eine Vorderansicht des Schwenkgehänges 20 dargestellt. Seine Ankopplung an die Montagetraverse 7 geschieht wie in Fig. 1, 2 beschrieben ebenfalls über die Dorne 9 und die Klaue 17.

**Patentansprüche**

1. Förderanlage zum Transport von Karosserien und/oder Karosserieteilen zu verschiedenen Bearbeitungsstationen, bestehend aus einer mit einem Fahrwerk versehenen Halteeinrichtung, die über Aufnahmeeinrichtungen die Karosserie und/oder die Karosserieteile trägt, wobei Teile der Halteeinrichtung in Anpassung an unterschiedliche Karosserietypen auswechselbar ausgebildet sind, dadurch gekennzeichnet, daß zwischen der Aufnahmeeinrichtung (8) und der Halteeinrichtung (5) eine Montagetraverse (7) zwischengeschaltet ist, die einerseits mit den karosserieund/oder karosserieteileseitigen Aufnahmeeinrichtungen (8) zusammenwirkt und andererseits karosserieunabhängige Befestigungseinrichtungen (6) für die Halteeinrichtung (5) aufweist.

2. Förderanlage nach Anspruch 1, dadurch gekennzeichnet, daß die Befestigungseinrichtungen (6) paarweise an jeder Aufnahmestelle für die Halteeinrichtung (5) vorgesehen sind.

3. Förderanlage nach Anspruch 1 oder 2, dadurch gekennzeichnet, daß die Befestigungseinrichtung (6) als von der Montagetraverse (7) abstehender Dorn (9) ausgebildet ist, der auf seinem Umfang Profilierungen (10) aufweist.

4. Förderanlage nach einem der vorangegangenen Ansprüche, dadurch gekennzeichnet, daß die Befestigungseinrichtung (6) aus mindestens einem Paar auf dem Umfang der Montagetraverse (7) angeordnete, parallelverlaufende Aufnahmebohrungen (21) besteht.

5. Förderanlage nach einem der vorangegangenen Ansprüche, dadurch gekennzeichnet, daß auf Höhe der Aufnahmebohrungen (21) die Montagetraverse (7) zwei parallel verlaufende Flanschflächen (22) aufweist, die in einer Ebene liegen, die senkrecht zur Achsenebene der Aufnahmebohrungen (21) liegt.

6. Förderanlage nach einem der vorangegangenen Ansprüche bei welcher als Befestigungseinrichtung an der Halteeinrichtung Zapfen vorgesehen sind, dadurch gekennzeichnet, daß die Aufnahmebohrungen (21) einer Montagetraverse (7) zur Zentrierung kalibriert ausgeführt sind, während die Aufnahmebohrungen (21) der anderen Montagetraverse (7) Übermaß aufweisen.

7. Förderanlage nach einem der vorangegangenen Ansprüche, dadurch gekennzeichnet, daß eine der kalibrierten Aufnahmebohrungen (21) Nennmaß auf dem gesamten Umfang und die andere nur in Längsrichtung der Montagetraverse (7) Nennmaß aufweist.

8. Förderanlage nach einem der vorangegangenen Ansprüche, dadurch gekennzeichnet, daß an der Montagetraverse (7) eine weitere, zusätzliche Befestigungseinrichtung (11) angeordnet ist, die mit der Halteeinrichtung 5 zusammenwirkt.

9. Förderanlage nach Anspruch 8, dadurch gekennzeichnet, daß die weitere Befestigungseinrichtung (11) als von der Montagetraverse (7) abstehender Bolzen (12) ausgebildet ist, und daß das Gehänge (5) den Bolzen gabelförmig umfaßt.

10. Förderanlage nach Anspruch 8, dadurch gekennzeichnet, daß die weitere Befestigungseinrichtung (11) als eine an der Montagetraverse (7) angebrachte Bohrung (13) ausgebildet ist, in die ein am Gehänge (5) verschiebbar gelagerter Bolzen (14) einführbar ist.

11. Förderanlage nach einem der vorangegangenen Ansprüche, dadurch gekennzeichnet, daß die Aufnahmeeinrichtungen (8) als Dome ausgebildet sind, in denen eine Schraube unverlierbar geführt ist.

12. Förderanlage nach einem der vorangegangenen Ansprüche, dadurch gekennzeichnet, daß die Dome an einer Längsseite der Montagetraverse (7) von außen angesetzt ausgeführt sind.

**Claims**

1. A conveyor installation for the transport of bodies and/or body parts to different processing stations, comprising support means provided with a travelling mechanism, which means carry the body and/or the body parts by means of reception devices, while parts of the support means are made exchangeable in adaptation to different body types, characterised in that an assembly girder (7) is interposed between the reception device (8) and the support means (5), which girder for the one part co-operates with the reception devices (8) of the body and/or body parts and for the other part comprises body-independent securing devices (6) for the support means (5).

2. A conveyor installation according to Claim 1, characterised in that the securing devices (6) are provided in pairs at each reception point for the support means (5).

3. A conveyor installation according to Claim 1 or 2, characterised in that the securing device (6) is formed as a bolt (9) protruding from the assembly girder (7) and having profilings (10) on its circumference.

4. A conveyor installation according to any one of the preceding Claims, characterised in that the securing device (6) comprises at least one pair of parallel-extending reception bores (21) arranged on the circumference of the assembly girder (7).

5. A conveyor installation according to any one of the preceding Claims, characterised in that, at the level of the reception bores (21), the assembly girder (7) has two flange faces (22) which extend parallel to one another and lie in one plane which lies perpendicularly of the axial plane of the reception bores (21).

6. A conveyor installation according to any one of the preceding Claims wherein pegs are provided as a securing device on the support means, characterised in that the reception bores (21) of one assembly girder (7) are of calibrated formation for centring, while the reception bores (21) of the other assembly girder (7) have excess dimensions.

7. A conveyor installation according to any one of the preceding Claims, characterised in that one of the calibrated reception bores (21) is of nominal size on the entire circumference and the other is of nominal size only in the longitudinal direction of the assembly girder (7).

8. A conveyor installation according to any one of the preceding Claims, characterised in that, on the assembly girder (7), there is arranged a further, additional securing device (11) which co-operates with the support means (5).

9. A conveyor installation according to Claim 8, characterised in that the further securing device (11) is formed as a bolt (12) protruding from the assembly girder (7), and that the hanger attachment (5) surrounds the bolt in fork form.

10. A conveyor installation according to Claim 8, characterised in that the further securing device (11) is formed as a bore (13) located in the assembly girder (7), into which bore a bolt (14) displaceably mounted on the hanger attachment (5) can be introduced.

11. A conveyor installation according to any one of the preceding Claims, characterised in that the reception devices (8) are formed as domes in which a screw is non-losably guided.

12. A conveyor installation according to any one of the preceding Claims, characterised in that the domes are made attachable from the outside on one longitudinal side of the assembly girder (7).

**Revendications**

1. Installation de convoyage pour le transport de carrosseries et/ou de parties de carrosserie vers des postes de montage différents, composée d'un dispositif de support muni d'un système de déplacement qui porte la carrosserie ou les parties de carrosserie sur des dispositifs de réception, où des éléments du dispositif de support sont réalisés de façon à pouvoir être changés sur des types de carrosserie différents, caractérisée en ce qu'entre le dispositif de réception (8) et le dispositif de support (5) est intercalée une traverse de montage (7) qui, d'un côté, coopère avec la carrosserie et/ou les dispositifs de réception du côté carrosserie et, d'un autre côté, comporte des dispositifs de fixation (6) ne dépendant pas de la carrosserie pour le dispositif de support (5).

2. Installation de convoyage selon la revendication 1, caractérisée en ce que les dispositifs de fixation (6) sont prévus par paire à chaque position de réception pour le dispositif de support (5).

3. Installation de convoyage selon la revendication 1 ou la revendication 2, caractérisée en ce que le dispositif de fixation (6) est sous forme d'un mandrin (9) espacé de la traverse de montage (7) et comporte des profilages (10) à sa périphérie.

4. Installation de convoyage selon l'une des revendications 1 à 3, caractérisée en ce que le dispositif de fixation (6) est constitué d'au moins une paire de trous de réception s'étendant parallèlement et placés à la périphérie de la traverse de montage (7).

5. Installation de convoyage selon l'une des revendications 1 à 4, caractérisée en ce que, à hauteur des trous de réception, la traverse de montage (7) comporte deux surfaces de bride s'étendant parallèlement qui se situent dans un plan se trouvant perpendiculaire au plan axial des trous de réception (21).

6. Installation de convoyage selon l'une des revendications 1 à 5, dans lesquelles sont prévus des tenons comme moyen de fixation sur le dispositif de support, caractérisée en ce que les trous de réception (21) d'une traverse de montage (7) sont réalisés de façon calibrée pour le centrage tandis que les trous de réception (21) de l'autre traverse de montage (7) sont surdimensionnés.

7. Installation de convoyage selon l'une des revendications 1 à 6, caractérisée en ce qu'un des trous calibrés (21) présente la dimension nominale sur la totalité de la périphérie et l'autre seulement dans la direction longitudinale de la traverse de montage (7).

8. Installation de convoyage selon l'une des revendications 1 à 7, caractérisée en ce que sur la traverse de montage (7) est placé un autre dispositif de fixation supplémentaire (11) qui coopère avec le dispositif de support (5).

9. Installation de convoyage selon la revendication 8, caractérisée en ce que l'autre dispositif de fixation (11) est constitué d'un boulon (12) s'écartant de la traverse de montage (7) et en ce que la suspension (5) entoure le boulon à la façon d'une fourchette.

10. Installation de convoyage selon la revendication 8, caractérisée en ce que l'autre dispositif de fixation (11) est constitué d'un trou (13) pratiqué dans la traverse de montage (7) et dans lequel peut être introduit un boulon (14) supporté de façon déplaçable sur la suspension (5).

11. Installation de convoyage selon l'une des revendications 1 à 10, caractérisée en ce que les dispositifs de réception (8) sont sous forme de coupoles dans lesquelles est guidée une vis de façon à ne pas pouvoir la perdre.

12. Installation de convoyage selon l'une des revendications 1 à 11, caractérisée en ce que les coupoles sont réalisées de façon ajoutées de l'extérieur sur un côté longitudinal de la traverse de montage (7).

FIG.1

0 224 928

FIG. 2 A

FIG. 2 B

FIG. 3

0 224 928

FIG. 4 A

FIG. 4 B

FIG. 5

FIG.6

20

7 9

0 224 928

6